(19) Europäisches Patentamt
European Patent Office
Office européen des brevets

(11) Publication number: **0 195 138 B1**

# (12) EUROPEAN PATENT SPECIFICATION

(45) Date of publication of patent specification: **29.05.91** (51) Int. Cl.[5]: **C08L 63/02**, C08F 283/10

(21) Application number: **85201978.5**

(22) Date of filing: **26.11.85**

## (54) Heat-curable epoxy composition.

(30) Priority: **24.12.84 US 685506**
**24.12.84 US 685505**
**28.01.85 US 695511**

(43) Date of publication of application:
**24.09.86 Bulletin 86/39**

(45) Publication of the grant of the patent:
**29.05.91 Bulletin 91/22**

(84) Designated Contracting States:
**AT BE CH DE FR GB IT LI NL SE**

(56) References cited:
**US-A- 4 156 035**
**US-A- 4 284 753**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Corley, Larry Steven**
**6807 San Pablo Drive**
**Houston Texas 77083(US)**

(74) Representative: **Aalbers, Onno et al**
**P.O. Box 302**
**NL-2501 CH The Hague(NL)**

EP 0 195 138 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is directed to a heat-curable composition comprising a polyepoxide, an unsaturated monomer, an amine, a trialkylsulphonium salt and a free-radical curing agent.

A large number of curing agents are known for epoxy resins but there is still a need to develop curable epoxy resin compositions which cure very rapidly at moderately elevated temperatures yet have very long pot life at room temperature.

It has now been found that certain trialkylsulphonium salts function as exellent accelerators for the amine cure of epoxy resin systems comprising certain unsaturated monomers. These accelerators are much more thermally latent than prior art accelerators such as $BF_3$ complexes, e.g. as described on pages 5-13 to 5-16 of "The Handbook of Epoxy Resins", by Lee and Neville, Mcgraw-Hill book company, 1967, and give a much longer room temperature pot life at equivalent 150 °C gel time. The present systems have lower viscosity thus enhancing the processability there-of.

The present invention is concerned with heat-curable epoxy resin compositions exhibiting improved thermal latency and pot life, which when cured, yield compositions exhibiting improved physical properties. More particularly, the invention provides a heat-curable composition comprising (1) a polyepoxide, (2) at least one aromatic or aliphatic amine, (3) a catalytic amount of a trialkyl sulphonium salt, (4) a curing amount of a free radical curing agent and (5) at least one unsaturated monomer selected from the group consisting of (i) vinyl aromatic monomers, (ii) alkyl esters or amides of ethylenically unsaturated monocarboxylic acids, (iii) cyano-containing compounds, (iv) vinyl esters, (v) N-vinylamides and (vi) allyl compounds. These compositions are suitable for use in sheet moulding compositions (SMC), in structural applications such as automotive parts, oil well parts (sucker rods), as well as in resin transfer moulding (RTM) applications. In addition to the above, these compositions also give reduced viscosity combined with excellent heat resistance, factors which make them leading candidates for a number of pultrusion, filament winding, and resin transfer moulding applications.

Preferably, the composition comprises a glycidyl polyether of a polyhydric phenol, from 0.5 to 1.5 chemical equivalents of an aromatic or aliphatic amine based on the glycidyl polyether, from 0.01% to 10% by weight of the glycidyl polyether of a trialkyl sulphonium salt, at least one unsaturated monomer curing amount of a free radical curing agent, and wherein the relative amount of epoxy resin to unsaturated monomer is 25 to 99% by weight of resin to 75 to 1% by weight of unsaturated monomer, preferably from 65 to 95% by weight of resin to from 35 to 5 % by weight of monomer.

The polyepoxides used to prepare the present compositions comprise those saturated or unsaturated compounds containing at least one vicinal epoxy group; i.e., at least one

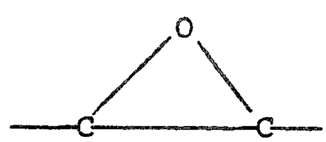

group. These polyepoxides may be saturated or unsaturated, aliphatic, cycloaliphatic, aromatic or heterocyclic and may be substituted if desired with non-interfering substituents such as halogen atoms, hydroxyl groups, ether linkages, and the like. They may also be monomeric or polymeric. For clarity, many of the polyepoxides and particularly those of the polymeric type are described in terms of epoxy equivalent values. The meaning of this expression is described in US-A-2,633,458. The polyepoxides used in the present process are preferably those having an epoxy equivalency greater than 1.0. Various examples of liquid polyepoxides that may be used in the process of the invention are given in US-A-2,633,458 and it is to be understood that the disclosure of that patent relative to examples of polyepoxides is incorporated by reference into this specification. Other suitable polyepoxides are disclosed in US-A-3,356,624, 3,408,219, 3,446,762, and 3,637,618.

Preferred polyepoxides are the glycidyl polyethers of polyhydric phenols, especially the glycidyl polyethers of 2,2-bis-(4-hydroxyphenyl)propane having an average molecular weight between about 300 and 3,000 and an epoxide equivalent weight between about 140 and 2,000 and more preferably an average molecular weight of from 300 to 1000 and an epoxide equivalent weight of from 140 to 650.

Suitable aromatic amines include, among others, methylenedianiline, metaphenylenediamine, 2,4-bis[p-aminobenzyl]aniline, diaminodiphenyl sulphone, 2,4-toluenediamine, 1,3-diamino-2,4-diethyl-6-methylbenzene, 4,4'-oxydianiline, methylenebis(orthochloroaniline), 2,6-diaminopyridine, 4-bromo-1,3-diaminobenzene, etc. Aliphatic amines such as bis(4-aminocyclohexyl)methane, 1,8-diamino-p-methane, or 1,2-diaminocyclohexane may also be used, although aromatic amines consitute a preferred class.

Suitable trialkyl sulphonium salts have the following general formula:

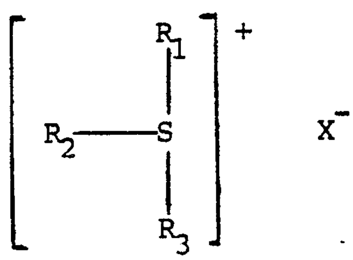

wherein $R_1$, $R_2$, and $R_3$ each represent the same or different alkyl radicals of from 1 to 18 carbon atoms; and X is selected from the group: $BF_4$, $PF_6$, $AsF_6$, $SbF_6$, $CF_3SO_3$, $FSO_3$, $CH_3SO_3$, 2,4,6-trinitrobenzene sulphonate, p-toluenesulphonate, etc. The alkyl radicals $R_1$, $R_2$ and $R_3$ may contain various substituents such as oxygen, sulphur, halogens.

Suitable trialkyl sulphonium salts include, among others, triethylsulfonium tetrafluorobroate, allyldimethylsulphonium tetrafluoroborate, allyl bis(2-(allyloxy)ethyl)-sulphonium tetrafluoroborate, trimethylsulphonium hexafluorophosphate, ethyl(2-hydroxyethyl)(2-(ethylthio)ethyl)sulphonium tetrafluoroborate, etc. Briefly, these sulphonium salts can be prepared by a number of processes. One process involves reaction of a sulphonium halide with the silver salt of a nonnucleophilic anion such as tetrafluoroborate. In a second process, an alcohol such as allyl alcohol, a sulfide such as dimethyl sulfide, and an acid such as tetrafluoroboric acid containing an anion of low nucleophilicity, are mixed and refluxed. In some cases a thiol may be used instead of a sulfide. Water is removed by azeotropic distillation. In a third process, a $\beta$-hydroxyalkyl sulphide, such as 2,2'-thiodiethanol, is mixed with an acid and water is removed by vacuum distillation leaving a sulphonium salt mixture.

A catalytic amount of sulphonium salts is used; i.e. from 0.01 to 10 % by weight of the polyepoxide, preferably from 0.3% to 5% by weight.

As noted hereinbefore, the polyepoxide is blended with vinylaromatic monomers, one or more monomers, selected from the group consisting of vinylaromatic monomers, esters or amides of ethylenically unsaturated carboxylic acids, cyano-containing compounds, vinyl esters, N-vinyl amides and allyl-containing compounds.

Suitable unsaturated monocarboxylic acid esters include the alkyl esters of ethylenically unsaturated acids such as acrylic acid, methacrylic acid, crotonic acid, alpha-phenylacrylic acid, alpha-cyclohexylacrylic acid, maleic acid, cyanoacrylic acid, methoxyacrylic acid, and the like. Very preferred acids are acrylic acid and methacrylic acid. Accordingly, suitable such esters include, methyl methacrylate, ethyl acrylate, butyl acrylate, butyl methacrylate, isobutyl methacrylate, and the like wherein side chains may contain halogen, e.g., 2,3-dibromopropyl acrylate, pentachlorophenyl methacrylate.

Very preferred monomers include the polyacrylate and polymethacrylateesters of polyols containing more than one terminal acrylate or methacrylate group. These esters are the acrylic and methacrylic acid esters of aliphatic polyhydric alcohols such as, for example, the di- and polyacrylates and the di-and polymethacrylates of alkylene glycols, polyoxyalkylene glycols, alicyclic glycols and higher polyols, such as ethylene glycol, triethylene glycol, tetraethylene glycol, tetramethylene glycol, hexanediol, trimethylolethane, trimethylolpropane, pentaerythritol, dipentaerythritol, tripentaerythritol and the like, or mixtures of these with each other or with their partially esterified analogs.

Typical compounds include but are not limited to trimethylolpropane triacrylate, trimethylolethane triacrylate, trimethylolpropane trimethacrylate, trimethylolethane trimethacrylate, tetramethylene glycol dimethacrylate, ethylene glycol dimethacrylate, triethylene glycol dimethacrylate, pentaerythritol triacrylate, pentaerythritol tetraacrylate, 1,6-hexanediol diacrylate, 1,6-hexanediol dimethacrylate, dipentaerythritol tetraacrylate, dipentaerythritol pentaacrylate, and the like. Particularly preferred esters are neopentyl glycol dimethacrylate, trimethylolpropane trimethacrylate, trimethylolpropane triacrylate, pentaerythritol triacrylate, and 1,3-butylene dimethacrylate. Other acrylate or methacrylate esters of polyols are the acrylate or methacrylate esters of epoxide resins, wherein epoxides resins as used herein are considered to be polyols. The epoxide resins useful in reacting with acrylic or methacrylic acid are those epoxide resins described hereinbefore. The procedures for preparing these acrylate and methacrylate esters of epoxide resins are described in US-A-3,377,406.

Suitable unsaturated carboxylic acid amides include acrylamide, N,N'-dimethylacrylamide, diacetone acrylamide, N-isopropyl-acrylamide, N,N'dimethyl methacrylamide.

Suitable cyano-compounds are acrylonitrile, methacrylonitrile, and halogenated acrylonitrile.

Suitable vinyl esters include vinyl acetate, vinyl benzoate, divinyl adipate. Suitable N-vinyl amides include N-vinylpyrrolidone, N-vinylacetamide, N,N-divinyladipamide.

Suitable allyl monomers include diallyl phthalate, triallyl isocyanurate, diallyl isophthalate, allyl diglycol carbonate.

Examples of vinyl aromatic monomers include the vinyl aromatic monomers such as styrenes, alphamethyl styrene; p-methyl styrene, vinyl tolune, chlorostyrene, divinylbenzene, tertiary-butylstyrene; and 2-vinylpyridine. Styrene is preferred. Suitable free radial curing agents include the peroxides, such as benzoyl peroxide, tertiary butyl hydroperoxide, ditertiary butyl peroxide, hydrogen peroxide, potassium persulphate, methyl cyclohexyl peroxide, cumene hydroperoxide, acetyl benzoyl peroxide, Tetralin hydroperoxide, phenylcyclohexane hydroperoxide, tertiary butyl peracetate, dicumyl peroxide, tertiary butyl perbenzoate, ditertiary amyl perphthalate, ditertiary butyl peradipate, tertiary amly percarbonate, and the like, and mixtures thereof; azo compounds such as 2,2'-azobisisobutyronitrile, dimethyl 2,2'-azobisisobutyrate, 2,2'-azobis(2,4-dimethylvaleronitrile), 2,2'-azobisisobutyramide, and the like. Particularly preferred catalysts include the dialkyl peroxides, tertiary alkyl hydroperoxides, alkyl esters of peroxycarboxylic acids and particularly those of the above noted groups which contain no more than 18 carbon atoms per molecule and which have a half-life of at least one hour at 125 °C.

The most preferred peroxide is 2,5-dimethyl-2,5-bis(tertiarybutylperoxy)hexane (Lupersol® 101).

The present compositions may be utilized in many applications such as for coatings and impregnating compositions in the preparation of adhesives for metals, wood, cement and the like, and in the preparation of reinforced composite products, such as laminated products, filament windings, sheet moulding compounds (SMC), electrical laminates, moulding powders, fluidized bed powders, potting compounds, etc. A very suitable application is in the preparation of reinforced products and laminates wherein the compositions are applied to fibrous products such as glass fibers or cloth and the material formed into the desired object and cured.

Examples are given to illustrate this invention. Unless otherwise indicated, parts and percentages in the examples, are parts and percentages by weight.

Epoxy Resin A is a liquid glycidyl polyether of 2,2-bis-(4-hydroxyphenyl)propane having an epoxide equivalent weight of 180-195 and an average molecular weight of about 380.

Curing Agent A is a liquid aromatic amine having an amine nitrogen content of 14-16% by weight and a viscosity (25 °C) of 15-35 poises, containing about 30% by weight of o-toluenediamine and 70% by weight of a mixture of polymethylene polyanilines.

The compositions were tested according to the following test procedures;

Heat distortion temperature, °C, ASTM D-648

Tensile Strength, MPa, ASTM D-638

Tensile Modulus, MPa, ASTM-638

Tensile Elongation, %, ASTM D-638

EXAMPLE 1 - Reaction of 2,2-Thiodiethanol with 48% Aqueous $HBF_4$

6200 g (50 moles) of 98.5% 2,2'-thiodiethanol was mixed with 4580 g (25 equivalents) of 48% aqueous tetrafluoroboric acid. A glass wiped-film evaporator with an evaporative surface area of 323 $cm^2$ was set up with a Teflon intake tube leading to the polyethylene reservoir; intake rate was controlled by a meterin valve. The evaporative surface was held at a temperature of 95-98 °C, while water was pumped from an ice bath to cool the condensation surface. The pressure in the evaporator was lowered to 40-130 Pa and the thiodiethanol-tetrafluoroboric acid mixture was introduced slowly. Water was evaporated from the mixture leaving the desired reaction product as the residue. The intake rate was regulated to give a product output rate of 10-12 ml/min. Titration of the product showed a water level of 2.5% in the product.

EXAMPLE 2 - Reaction of 2-(Ethylthio)ethanol with 48% Aqueous $HBF_4$

6372 g (60 moles) of 2-(ethylthio)ethanol was mixed with 5487 g (30 equivalents) of 48% aqueous tetrafluoroboric acid. A glass wiped-film evaporator was set up under evaporation conditions identical to those in Example 1. The feed intake rate was regulated to give a product output rate of 5-15 ml/min.

Titration showed a water level of 2.5% in the product. Neutron activation analysis gave boron levels in the product of 4.2 and 4.3 weight percent. The $^{13}C$ NMR spectrum of the product in acetone-$d_6$ was consistent with a structure of

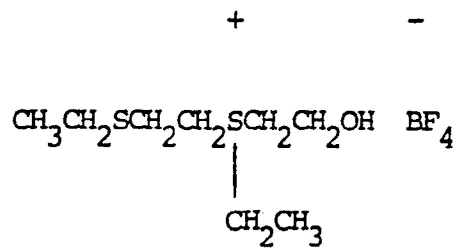

for 72 %w of the product, with the product apparently containing 2 %w of 2-(ethylthio)ethanol and 26 %w of other components of unknown structure.

EXAMPLE 3 - Preparation of Crude Allyldimethylsulphonium Tetrafluoroborate

Into a 3-neck 5-litre flask were weighed 1161.6 g (20 moles) of allyl alcohol, 950 g (15.3 moles) of dimethyl sulphide, and 1829 g (10 moles) of 48% aqueous tetrafluoroboric acid. The flask was attached to a 1.5 litre trap (initially filled with dimethyl sulphide), attached to a condenser. Reflux was started and an aqueous phase began to accumulate at the bottom of the trap, displacing dimethyl sulphide back into the reaction mixture. Reflux was continued for six days. At the end of this period, the rate of accumulation of aqueous phase had become very small. The aqueous phase was drained into a bottle and weighed; the net weight of the aqueous phase was 1136.7 g. Excess dimethyl sulphide and allyl alcohol were distilled-off at atmospheric pressure until the temperature in the flask had reached 100 °C. At this point, the flask was connected to a dry ice trap and vacuum was applied. The mixture in the flask was evaporated at 70 °C under magnetic stirring for one hour, with the pressure decreasing to a final value of 200 Pa. The yield of nonvolatile product was 1952 g. The nonvolatile product was a viscous liquid containing a small amount of crystals. It showed no signs of further crystallization on standing at room temperature.

EXAMPLE 4 - Use of Sulfonium Salts to Accelerate Aromatic Amine Cure of Epoxy Resins Diluted with Acrylic, Allyl and Vinyl Monomers

Epoxy Resin A ( 100 parts by weight), Curing Agent A (25 parts by weight), monomers and catalysts in the proportions listed in Table 1 were combined at room temperature and mixed thoroughly. Viscosity and 150 °C gel time were determined on each mixture shortly after mixing.

A portion of each mixture was poured into a mould made of two glass plates held 3.2 mm apart with a polytetrafluoroethylene spacer to make a sheet casting. Another portion of each mixture was poured into two aluminium moulds containing a linear cavity 12.7 mm square to form bar castings. The sheet and bar moulds were placed in an oven and held for two hours at 80 °C and two hours at 150 °C. The sheet and bar castings were then removed from the moulds and tested for mechanical properties. Mechanical properties are given in Table I.

A number of salient points can be seen from Table I. First, all of the monomers tested gave considerable reductions in system viscosity. Room temperature tensile strength, modulus and elongation were good in all systems tested. Heat deflection temperature (HDT), however, were depressed in comparison with values for the undiluted systems (control experiments; last two experiments in table). Depression of HDT was greater for monofunctional diluents than for mixtures of monofunctional and closely related multifunctional diluents. It was also greater for acrylate than for similar methacrylate mixtures. Diluent monomers containing nitrogen (N-vinylpyrrolidone and N,N-dimethylacrylamide) raised the gel time of the catalyzed mixtures somewhat in comparison with other monomers.

TABLE I

| Monomers, pbw (a) | Catalysts, pbw (b) | 150 °C gel time, s | Viscosity, 24 °C, MPa.s$^{-1}$ | HDT °C | A | B | C |
|---|---|---|---|---|---|---|---|
| IBMA (10) | | 490 | 1240 | 136 | 81 | 2900 | 6.2 |
| TMPTMA (10) | Lupersol 101 (0.4) | | | | | | |
| IBMA (12) | Catalyst 3 (0.7) | 97 | 1390 | 127 | 74 | 2700 | 5.6 |
| | Lupersol 101 (0.4) | | | | | | |
| BA (12) | Catalyst 3 (0.7) | 90 | 1175 | 98 | 64 | 2500 | 5.8 |
| | Lupersol 101 (0.4) | | | | | | |
| IBMA (10) | Catalyst 3 (0.7) | 110 | 1225 | 123 | 81 | 2920 | 6.3 |
| TMPTMA (10) | Lupersol 101 (0.4) | | | | | | |
| BA (10) | Catalyst 3 (0.7) | 115 | 1125 | 96 | 68 | 3130 | 6.6 |
| TMPTA (10) | Lupersol 101 (0.4) | | | | | | |
| IBMA (10) | Catalyst 1 (1.0) | 148 | 1375 | 127 | 78 | 2800 | 5.2 |
| TMPTMA (10) | Lupersol 101 (0.4) | | | | | | |
| IBMA (10) | Catalyst 2 (1.0) | 118 | 1510 | 125 | 74 | 2830 | 4.6 |
| TMPTMA (10) | Lupersol 101 (0.4) | | | | | | |
| Diallyl phthalate (20) | Lupersol 101 (2.0) | 510 | 1925 | 87 | 72 | 2900 | 5.9 |
| Diallyl phthalate (20) | Catalyst 3 (0.7) | 112 | 2010 | 82 | — | — | — |
| | Lupersol 101 (2.0) | | | | | | |
| N-Vinylpyrrolidone (15) | Lupersol 101 (1.0) | 415 | 1975 | 112 | 84 | 3120 | 6.5 |
| N,N-Dimethylacryl-amide (15) | Lupersol 101 (0.4) | 400 | 1190 | 117 | 82 | 3040 | 5.8 |
| N,N-Dimethylacryl-amide (15) | Catalyst 3 (0.7) | 205 | 1360 | 95 | 74 | 2950 | 6.4 |
| | Lupersol 101 (0.4) | | | | | | |
| (none) | Catalyst 3 (0.7) | 90 | — | 148 | 67 | 2910 | 3.4 |
| (none) | (none) | > 300 | 3850 | 155 | 61 | 2580 | 4.9 |

"IBMA" is isobutyl methacrylate; "TMPTMA" is trimethylolpropane trimethacrylate; "BA" is butyl acrylate; "TMPTA" is trimethylolpropane triacrylate.
Catalyst 1 = product of Example 1; Catalyst 2 = product of Example 2; Catalyst 3 = product of Example 3 (crude allyldimethylsulphonium tetrafluoroborate).
Tensile strength, MPa; B = Tensile modulus, MPa; C = Tensile Elongation, %. * = for comparison

EXAMPLE 5 - Preparation of a $BF_3$-Accelerated Version of Curing Agent A

Curing Agent A (300 g) was heated to 60-70 °C. Boron trifluoride diethyl etherate (4.8 g) was added to the molten Curing Agent A in a fume hood. At this point there was release of diethyl ether vapour; a precipitate formed on the surface of the aromatic amine mixture. The mixture was held at 60-70 °C with occasional shaking until all the precipitate had dissolved.

EXAMPLE 6 - Use of Sulphonium Salts to Accelerate Aromatic Amine Cure of Epoxy Resins Diluted with Styrenic Monomers

Epoxy Resin A (100 parts by weight), Curing Agent A (25 parts by weight), monomers and catalysts in the proportions listed in Table II were combined at room temperature and mixed thoroughly. The curing agent used the last experiment of Table II was the product of Example 5. Samples for testing purposes were prepared as stated in Example 4.

A third portion of each mixture was poured into a Ubbelohde viscometer which in turn was placed in a constant-temperature bath set at 25 °C. Viscosity was determined periodically for each mixture. From the viscosity data was determined for each mixture a "pot life", or the amount of time required for the viscosity to double from its initial value.

From Table II one can see that all three sulphonium salts used (Catalyst 1, Catalyst 2, and Catalyst 3) were considerably more latent accelerators than was the control $BF_3$-diethyl etherate (experiment 10). The 25 °C pot life of the system accelerated with $BF_3$-diethyl etherate was by far the shortest of any system tested, although this system was in the range of the other accelerated systems in 150 °C gel time. In the accelerated systems, progressive replacement of the styrene with divinylbenzene did not change the gel time greatly.

All of the diluted systems were depressed in heat distortion temperature (HDT) in comparison with the undiluted system, with substitution of divinylbenzene for styrene only marginally effective for HDT recovery. Room temperature tensile properties of all of the systems were comparable.

TABLE II

| Exp. | Styrene, pbw | Divinyl-benzene, pbw | Catalysts, pbw (a) | 150 °C gel time, s | Time (min) - 25 °C Ubbelohde Viscosity ($MPa.s^{-1}$) | 25 °C Pot Life h | HDT °C | A | B | C |
|---|---|---|---|---|---|---|---|---|---|---|
| 1* | | | Cat 3 (0.7) | 90 | | | 148 | 67 | 2910 | 3.4 |
| 2 | 12 | | Cat 3 (0.7) Lupersol 101 (0.4) | 96 | 60-1019,120-1174, 240-1484,360-2029, 390-2422 | 4.33 | 116 | 75 | 2870 | 5.2 |
| 3 | 24 | | Cat 3 (0.7) Lupersol 101 (0.4) | 90 | | | 121 | 76 | 3050 | 5.6 |
| 4 | 48 | | Cat 3 (0.7) Lupersol 101 (0.4) | 95 | | | 110 | 75 | 3180 | 5.1 |
| 5* | 12 | | Lupersol 101 (0.4) | 420 | 95-688,180-688, 315-818,435-955 | > 10 | 133 | 79 | 2890 | 5.3 |
| 6 | 6 | 6 | Cat 3 (0.7) Lupersol 101 (0.4) | 86 | | | 119 | 73 | 2960 | 4.1 |
| 7 | | 12 | Cat 3 (0.7) Lupersol 101 (0.4) | 87 | 60-1465,120-1745, 240-2271,360-3232, 390-3967 | 4.83 | 125 | 85 | 3470 | 4.9 |
| 8 | 12 | | Cat 1 (1.0) Lupersol 101 (0.4) | 112 | 60-918,120-1067, 240-1370,360-1890, 390-2189 | 4.41 | 126 | 78 | 3520 | 4.2 |
| 9 | 12 | | Cat 2 (1.0) Lupersol 101 (0.4) | 87 | 60-1016,120-1288, 240-1832,360-2852, 390-3456 | 3.83 | 125 | 84 | 3140 | 6.6 |
| 10* | 12 | | $BF_3O(C_2H_5)_2$ (0.4) Lupersol 101 (0.4) | 103 | 92-1177,180-2677 | ~ 2.0 | 125 | 78 | 3580 | 4.5 |

(a) Catalyst 1 = product of Example 2
Catalyst 2 = product of Example 3
Catalyst 3 = product of Example 4 (crude allyldimethylsulphonium tetrafluoroborate)

A = Tensile strength, MPa; B = Tensile Modules, MPa; C = Tensile Elongation, %. * = for comparison

EXAMPLE 7 - Preparation of a Liquid Sulphonium Salt Mixture Based on 2,2'-Thiodiethanol and Boron Trifluoride Etherate

2,2'-Thiodiethanol (12.2 g) was mixed with boron trifluoride diethyl etherate (7.1 g) in a polyethylene bottle and allowed to stand overnight at room temperature. The following day, the mixture had separated into two layers. Six days later, the lower layer (15 g) was transferred to a 100 ml glass round bottom flask

and evaporated in a rotary evaporator at 40 °C and 400-600 Pa pressure. The product (K) after evaporation was a viscous light yellow liquid, weight 14 g.

EXAMPLE 8 - Preparation of a Liquid Sulphonium Salt Mixture Based on 2,2'-Thiodiethanol and Aqueous Tetrafluoroboric Acid

2,2'-Thiodiethanol (13.3 g) was mixed with 10.0 g of a 48% aqueous solution of tetrafluoroboric acid and allowed to stand at room temperature for 12 days. The contents were then poured into a 100 ml glass round bottom flask and evaporated in a rotary evaporator for 45 minutes at 80 °C and 400-600 Pa pressure. The product (L) after evaporation was a viscous light yellow liquid, weight 16 g.

EXAMPLE 9 - Rapid Preparation of a Liquid Sulphonium Salt Mixture Based on 2,2'-Thiodiethanol and Aqueous Tetrafluoroboric Acid

2,2'-Thiodiethanol (13.3 g) was mixed with 10.0 g of a 48% aqueous solution of tetrafluoroboric acid in a 100 ml glass round bottom flask. The flask was transferred to a rotary evaporator and water was removed from the mixture for 45 minutes at 80 °C and 400-600 Pa pressure. The product (M) after evaporation was a viscous light yellow liquid, weight 16 g.

EXAMPLE 10 - Determination of Gel Time and Pot Life for Aromatic Amine Cured Epoxy Resins Diluted With Styrene and Trimethylolpropane Trimethacrylate (TMPTMA) and Accelerated With Sulphonium Salts

MIxtures of the following components were prepared. The gel times of the mixtures were determined on a hot plate at 150 °C. The mixtures were poured into viscometers which were then placed in a 25 °C constant temperature water bath. Viscosity of each mixture was determined periodically. Data for each mixture are given in Table III.

A number of salient points can be noted from Table III. First, copper and zinc tetrafluoroborates appeared similar to $BF_3$ diethyl etherate in catalysis of aromatic amine cure of epoxides with regard to 25 °C pot life-150 °C gel time relationship. All three materials gave pot lives of 150-210 minutes at gel times of 75-85 seconds.

Methyldiphenylsulphonium and ethyldiphenylsulphonium tetrafluoroborates showed an even less favourable combination of gel time and pot life with 25 °C pot lives of 120-130 minutes at 150 °C gel times of 75-92 seconds. Triethylsulphonium tetrafluoroborate showed a very favourable combination of 960 minutes pot life and 107 seconds gel time. However, a strong sulphide odour was emitted during gel-plate cure of the system accelerated with triethylsulphonium tetrafluoroborate.

When sulphonium salt mixture (K), (L), or (M) were used as catalysts, only a very slight sulphide odour could be detected during cure. These latter catalysts also had favourable combinations of gel time and pot life, with 25 °C pot life ranging from 400 to 440 minutes at 150 °C gel times of 65 to 95 seconds.

TABLE III

POT LIFE-GEL TIME RELATIONSHIP FOR ACCELERATED DILUTED AROMATIC AMINE-CURED EPOXY RESINS[a)]

| Accelerator | Accelerator pbw | Time After Mixing (min) - Viscosity ($MPa.s^{-1}$) | Gel Time 150 °C, s | Pot Life 25 °C, min[b)] |
|---|---|---|---|---|
| None * | | 140-946, 265-1009, 385-1083 | 562 | 1,200 |
| $BF_3$ Diethyl Etherate * | 0.33 | 125-1603, 280-3466, 335-4432, 405-6676 | 81 | 150 |
| $Cu(BF_4)_2$ (45% Aqueous Solution) * | 1.00 | 120-1835, 275-3671, 335-5531, 395-8216 | 76 | 210 |
| $Zn(BF_4)_2$ (40% Aqueous Solution) * | 0.50 | 135-1817, 295-4134, 355-6356, 405-8454 | 85 | 180 |
| Triethylsulphonium Tetrafluoroborate * | 2.00 | 70-1082, 135-1126, 315-1281, 395-1353 | 107 | 960 |
| Methyldiphenylsulphonium Tetrafluoroborate * | 2.00 | 60-1548, 140-7034, 245-Gelled | 27 | 70 |
| Ethyldiphenylsulphonium Tetrafluoroborate * | 2.00 | 70-1400, 140-3815, 245-Gelled | 35 | 90 |
| None * | | 80-886, 135-913, 325-1035, 400-1084 | 514 | 1,200 |
| Methyldiphenylsulphonium Tetrafluoroborate * | 0.69 | 65-1010, 140-1623, 230-2816, 290-3966 | 75-85 | 120 |
| Ethyldiphenylsulphonium Tetrafluoroborate * | 0.69 | 65-1023, 140-1486, 230-2412, 290-3102 | 85-92 | 130 |
| (K) | 1.16 | 65-955, 140-1106, 230-1245, 290-1363, 375-1610 | 85-95 | 400 |
| None * | | 50-875, 190-948, 330-1036, 495-1157 | | 1,200 |
| (L) | 1.16 | 60-952, 190-1146, 330-1486, 495-2214 | 65-75 | 410 |
| (M) | 1.16 | 55-975, 195-1154, 335-1467, 495-2096 | 70-80 | 440 |

a) Mixtures:

| Component | Parts by Weight |
|---|---|
| Epoxy Resin A | 100 |
| Styrene | 15 |
| Lupersol 101 | 0.5 |
| Curithane 103 | 15.2 |
| 2,4-bis(p-aminobenzyl)aniline (BABA) | 22.8 |
| Trimethylolpropane Trimethacrylate (TMPTMA) | 15 |
| Accelerator | As above |

b) Time to doubling of initial viscosity (interpolated or extrapolated).

* for comparison

## Claims

1. A curable composition comprising (1) a polyepoxide, (2) at least one aromatic or aliphatic amine, (3) a catalytic amount of a trialkyl sulphonium salt, (4) a curing amount of a free radical curing agent and (5) at least one unsaturated monomer selected from the group consisting of (i) vinylaromatic monomers, (ii) alkyl esters or amides of ethylenically unsaturated monocarboxylic acids, (iii) cyano-containing compounds, (iv) vinyl esters (v) N-vinylamides and (vi) allyl compounds.

2. The composition of claim 1 wherein the polyepoxide is a glycidyl polyether of 2,2-bis(4-hydroxyphenyl)-propane.

3. The composition of claim 1 wherein the trihydrocarbyl sulphonium salt is a mixture prepared by the condensation of 2,2'-thiodiethanol with tetrafluoroboric acid.

4. The composition of claim 1 wherein the unsaturated monomer is butyl acrylate.

5. The composition of claim 1 wherein the unsaturated monomer is isobutyl methacrylate.

6. The composition of claim 1 wherein the unsaturated monomer is a poly(meth)acrylate ester of a polyol.

7. The composition of claim 1 wherein the unsaturated monomer is trimethylolpropane trimethacrylate.

8. The composition of claim 1 wherein said unsaturated monomer is diallyl phthalate.

9. The composition of claim 1 wherein the unsaturated monomer is N,N'-dimethylacrylamide.

10. The composition of claim 1 wherein the unsaturated monomer is N-vinylpyrrolidone.

11. The composition of claim 1 wherein the unsaturated monomer is styrene.

## Revendications

1. Une composition durcissable comportant (1) un polyépoxyde, (2) au moins une amine aliphatique ou aromatique, (3) une quantité catalytique d'un sel de trialkylsulfonium, (4) une quantité durcissante d'un agent durcissant à radicaux libres et (5) au moins un monomère non saturé choisi dans le groupe constitué par (i) les monomères vinyl-aromatiques, (ii) les esters d'alkyle ou les amides d'acides monocarboxyliques éthyléniquement insaturés, (iii) des composés renfermant du cyano, (iv) des esters vinyliques, (v) des N-vinylamides, et (vi) des composés allyliques.

2. La composition de la revendication 1, dans laquelle le polyépoxyde est un polyéther glycidylique de 2,2-bis(4-hydroxyphényl)propane.

3. La composition de la revendication 1, dans laquelle le sei de trihydrocarbyle sulfonium est un mélange préparé par la condensation du 2,2'-thiodiéthanol avec de l'acide tétrafluoroborique.

4. La composition de la revendication 1, dans laquelle ie monomère insaturé est de l'acrylate de buthyle.

5. La composition de la revendication 1, dans laquelle le monomère insaturé est du méthacrylate d'isobutyle.

6. La composition de la revendication 1, dans laquelle le monomère insaturé est un ester poly(méth)-acrylate d'un polyol.

7. La composition de la revendication 1, dans laquelle le monomère insaturé est du triméthacrylate de triméthylolpropane.

8. La composition de la revendication 1, dans laquelle ledit monomère insaturé est du phtalate de diallyle.

9. La composition de la revendication 1, dans laquelle le monomère insaturé est la N,N'-méthylacrylami-

ne.

10. La composition de la revendication 1, dans laquelle le monomère insaturé est la N-vinylpyrrolidone.

11. La composition de la revendication 1, dans laquelle le monomère insaturé est le styrène.

**Ansprüche**

1. Härtbare Zusammensetzung, umfassend (1) ein Polyepoxid, (2) wenigstens ein aromatisches oder aliphatisches Amin, (3) eine katalytische Menge eines Trialkylsulfoniumsalzes, (4) eine Härtungsmenge eines freiradikalischen Härtungsmittels und (5) wenigstens ein ungesättigtes Monomer, ausgewählt aus der aus (i) vinylaromatischen Monomeren, (ii) Alkylestern oder Amiden von ethylenisch ungesättigten Monocarbonsäuren, (iii) Cyanogruppen enthaltenden Verbindungen, (iv) Vinylestern, (v) N-Vinylamiden und (vi) Allylverbindungen bestehenden Gruppe.

2. Zusammensetzung nach Anspruch 1, worin das Polyepoxid ein Glycidylpolyether von 2,2'-Bis(4-hydroxyphenyl)propan ist.

3. Zusammensetzung nach Anspruch 1, worin das Trialkylsulfoniumsalz ein durch Kondensation von 2,2'-Thiodiethanol mit Tetrafluorborsäure bereitetes Gemisch ist.

4. Zusammensetzung nach Anspruch 1, worin das ungesättigte Monomer Butylacrylat ist.

5. Zusammensetzung nach Anspruch 1, worin das ungesättigte Monomer Isobutylmethacrylat ist.

6. Zusammensetzung nach Anspruch 1, worin das ungesättigte Monomer ein Poly(meth)acrylatester eines Polyols ist.

7. Zusammensetzung nach Anspruch 1, worin das ungesättigte Monomer Trimethylolpropantrimethacrylat ist.

8. Zusammensetzung nach Anspruch 1, worin das ungesättigte Monomer Diallylphthalat ist.

9. Zusammensetzung nach Anspruch 1, worin das ungesättigte Monomer N,N'-Dimethylacrylamid ist.

10. Zusammensetzung nach Anspruch 1, worin das ungesättigte Monomer N-Vinylpyrollidon ist.

11. Zusammensetzung nach Anspruch 1, worin das ungesättigte Monomer Styrol ist.